# EUROPÄISCHE PATENTSCHRIFT

(11) **EP 1 790 899 B1**
(45) Veröffentlichungstag und Bekanntmachung des Hinweises auf die Patenterteilung: **03.06.2009**
(21) Anmeldenummer: 06021481.4
(22) Anmeldetag: 13.10.2006
(51) Int. Cl.: F16L 37/098

(54) **Steckkupplung zum Verbinden zweier Fluidleitungen**
Plug-in coupling for connecting two fluid conduits
Raccord enfichable pour raccorder deux conduites de fluide

(30) Priorität: 28.11.2005 DE 102005056777
(43) Veröffentlichungstag der Anmeldung: 30.05.2007
(73) Patentinhaber: NORMA Germany GmbH, 63277 Maintal (DE)
(72) Erfinder: Strauss, Oliver, 61130 Nidderau (DE)
(74) Vertreter: Knoblauch, Andreas

(56) Entgegenhaltungen:
- EP-A1- 0 691 502
- EP-A1- 0 992 729
- EP-A1- 1 380 791
- EP-A2- 0 846 907
- DE-A1- 3 727 858
- DE-C1- 3 843 995
- DE-C1- 19 708 377
- DE-C1- 19 822 574
- US-A1- 6 145 886
- US-A1- 2005 230 968

## Beschreibung

Die Erfindung betrifft eine Steckkupplung zum Verbinden zweier Fluidleitungen mit einem ersten Teil, das einen umlaufenden Vorsprung mit einer zu einem axialen Ende hin gerichteten Anlauffläche und einer zum anderen axialen Ende hin gerichteten Anschlagfläche aufweist, und einem zweiten Teil, das einen an Stegen gehaltenen elastisch verformbaren Ring aufweist, der in einer Verriegelungsstellung hinter der Anschlagfläche einrastet, wobei ein Montageindikator mit jeweils einem von mindestens zwei Armen an einem der Stege verrastet ist, solange der Ring nicht hinter der Anschlagfläche eingerastet ist, und der Vorsprung die Arme so weit auseinanderdrückt, daß die Arme von den Stegen freikommen, wenn der Ring hinter der Anschlagfläche eingerastet ist.

Eine derartige Steckkupplung ist aus US 6 145 886 bekannt. Dort ist eine Steckkupplung zum Verbinden zweier Leitungen mit einem ersten Teil und einem zweiten Teil offenbart. Das erste Teil weist einen umlaufenden Vorsprung auf, der mit einer zu einem axialen Ende hin gerichteten Anlauffläche und einer zum anderen axialen Ende hin gerichteten Anschlagfläche versehen ist. Das zweite Teil weist einen ringförmigen, elastischen Körper auf, der mit seinen Klauen nach Einführen des ersten Teils hinter der Anschlagfläche einrastet. Im Bereich der Klauen weist das zweite Teil Öffnungen auf, zwischen denen sich Stege befinden. Um feststellen zu können, ob das erste Teil sicher im zweiten Teil verrastet ist, ist ein Montageindikator vorgesehen, der mit jeweils einem von mindestens zwei Armen in den Löchern verrastet ist. Sobald der Körper hinter der Anschlagfläche des ersten Teils einrastet, werden die Arme durch den Vorsprung auseinandergedrückt, so daß der Montageindikator entriegelt wird und entnommen werden kann.

EP 0 846 907 A2 offenbart einen Steckverbinder, der ein erstes Teil, ein zweites Teil und einen Montageindikator aufweist. Bei nicht in das zweite Teil eingeführtem ersten Teil ist der Montageindikator mit zwei Armen in Fenstern des zweiten Teils eingerastet. Das erste Teil weist einen umlaufenden Kragen auf, der die Arme radial nach außen drückt, wenn das erste Teil vollständig in das zweite Teil eingeführt ist, so daß der Montageindikator problemlos entfernt werden kann. Dabei wird das erste Teil innerhalb des zweiten Teils mit Hilfe eines Rastelements gehalten, das mit dem umlaufenden Kragen verrastet.

US 2005/0230 968 A1 offenbart einen Steckverbinder mit einem Aufnahmeteil, in das ein Einsteckteil einführbar ist, wobei das Einsteckteil einen umlaufenden Vorsprung aufweist, mit dem es im Aufnahmeteil verrastbar ist. Mit Hilfe eines Montageindikators ist feststellbar, ob das Einsteckteil ordentlich im Aufnahmeteil verrastet ist. Der Montageindikator weist zwei Arme auf, die in Öffnungen im Aufnahmeteil verrastet sind. Beim Einführen des Einsteckteils werden die Arme durch den Vorsprung radial nach außen gedrückt, so daß der Montageindikator leicht entfernbar ist.

Aus DE 197 08 377 C1 ist eine lösbare Steckverbindung mit einem Montageindikator bekannt, der vorgespannt in einem Aufnahmeteil eingerastet ist. Durch vollständiges Einführen eines Einsteckteils in das Aufnahmeteil wird der Montageindikator entriegelt und entspannt. Gleichzeitig verrastet das Einsteckteil mit seiner umlaufenden Halterippe in einem separaten Halteelement, das innerhalb des Aufnahmeteils angeordnet ist. Durch die Stellung des Montageindikators ist leicht erkennbar, ob das erste Teil korrekt montiert ist, wobei der Montageindikator nicht verloren werden kann.

In DE 198 22 574 C1 ist eine lösbare Schnellkupplung mit automatischer Montageanzeige offenbart, die ein Aufnahmeteil mit einem zylindrischen Aufnahmeraum für ein Einsteckteil aufweist, das mit einer umlaufenden Halterippe versehen ist. Das Einsteckteil wird mit Hilfe eines separaten Halteelements im Aufnahmeteil verrastet, das durch eine radiale Öffnung im Aufnahmeteil eingesetzt ist. Ein Montageindikator ist über Stütznasen an der inneren Umfangsfläche des Aufnahmeteils verrastet, die beim Einführen des Einsteckteils durch die umlaufende Halterippe gelöst werden, so daß sich der Montageindikator ruckartig löst und axial aus dem Aufnahmeteil heraus bewegt.

Aus EP 0 992 729 A1 ist ein Steckverschluß mit einem Montageindikator bekannt, der an einem Ende eines Aufnahmeteils angeordnet ist, wobei der Montageindikator über dieses Ende übersteht. Ein Schiebeelement ist an diesem Ende in das Aufnahmeteil eingeführt. Beim Einführen eines Einsteckteils in das Aufnahmeteil wird das Schiebeelement in Richtung des Aufnahmeteils mit genommen, wobei es Arme des Montageindikators radial nach außen aufbiegt, so daß dieser entfernt werden kann. Die Arme des Montageindikators weisen an ihren Enden Rasthaken und in einer Entfernung dazu Hilfsanschläge auf. Die Entfernung entspricht in etwa der Breite von Führungsstegen, an denen der Montageindikator verrastet ist.

In EP 1 380 791 A1 ist eine Steckkupplung zum Verbinden zweier Fluidleitungen beschrieben, die einen U-förmigen Montageindikator aufweist, der an seinen Armen je einen Vorsprung aufweist. Der Montageindikator kann dabei nur nach richtigen Zusammenkuppeln der beiden Fluidleitungen entfernt werden.

Aus DE 37 27 858 A1 ist eine Schnellverbindung zum Verbinden einer Schlauch- oder Rohrleitung bekannt, die ein erstes Teil mit einem umlaufenden Vorsprung und ein zweites ringförmigen Teil mit nach innen vorstehenden Nocken aufweist. Der umlaufende Vorsprung weist eine zu einem axialen Ende hin gerichtete Anlauffläche und eine zum anderen axialen Ende hin gerichtete Anschlagfläche auf. Im montierten Zustand verrasten die Nocken mit dem umlaufenden Vorsprung, so daß das erste Teil sicher im zweiten Teil gehalten ist.

Wenn die beiden Teile zusammengesteckt werden, dann drückt der Vorsprung die beiden Nocken auseinander und verformt dabei den Ring. Wenn der Vorsprung die Nocken passiert hat, dann federt der Ring wieder in seine Ausgangskonfiguration zurück. Der Ring rastet dann mit den beiden Nocken hinter der Anschlagfläche ein. Wenn man die Steckkupplung lösen möchte, dann kann man den Ring zusammendrücken, wobei diese Druckrichtung etwa 90° zu der Achse versetzt ist, auf der die beiden Nocken angeordnet sind. Die beiden Nocken vergrößern dann ihren Abstand zueinander, so daß sie von der Anschlagfläche freikommen. In diesem Fall kann das zweite Teil aus dem ersten Teil wieder herausgezogen werden.

EP 0 691 502 A1 offenbart einen Steckverbinder für Schlauch- und/oder Rohrleitungen mit einem Steckerteil und einem Aufnahmeteil. Das Steckerteil ist über federelastische Stege mit einem elastisch verformbaren Ring verbunden. Dieser Ring verrastet im zusammengebauten Zustand mit einem umlaufenden Steg, der am Außenumfang des Aufnahmeteils angeordnet ist.

DE 38 43 995 C1 offenbart eine Schnellverbindung zum Verbinden einer Schlauch- oder Rohrleitung, wobei ein erstes Einsteckteil mit einem umlaufenden Vorsprung in einem ellipsenförmigen, elastisch verformbaren Ring eines Aufnahmeteils rastend gehalten wird.

Derartige Steckkupplungen haben sich grundsätzlich bewährt. Allerdings ist es unter bestimmten Montagebedingungen schwierig, das Einrasten zuverlässig zu kontrollieren. Wenn der Geräuschpegel es zuläßt, dann kann der Monteur beim erfolgreichen Zusammenstecken der beiden Teile ein Klicken wahrnehmen, das anzeigt, daß der Ring hinter dem Vorsprung eingerastet ist. Bei einer Montageumgebung, in der ein größerer Geräuschpegel herrscht, beispielsweise in einer Fabrikhalle, in der Kraftfahrzeuge montiert werden, steht diese akustische Information aber nicht immer oder nicht mit der nötigen Zuverlässigkeit zur Verfügung.

Der Erfindung liegt die Aufgabe zugrunde, ein unbeabsichtigtes Lösen des Montageindikators weitgehend zu verhindern.

Diese Aufgabe wird bei einer Steckkupplung der eingangs genannten Art dadurch gelöst, daß mindestens einem Arm ein Haltearm zugeordnet ist, der radial innerhalb des Steges angeordnet ist.

Der Montageindikator ist also, solange die beiden Teile noch nicht richtig miteinander verbunden sind, auf dem zweiten Teil festgehalten. Das Festhalten erfolgt über eine Rastverbindung. Eine derartige Rastverbindung ist stabil genug, um ein versehentliches Lösen des Montageindikators vom zweiten Teil zu verhindern. Solange der Montageindikator also nicht vom zweiten Teil abgezogen werden kann, ohne größere Kräfte aufzubringen, ist dies ein Zeichen dafür, daß das erste Teil und das zweite Teil noch nicht richtig miteinander verrastet sind. Erst dann, wenn der Vorsprung am ersten Teil so weit durch den Ring hindurchgeschoben worden ist, daß der Ring, ggf. mit entsprechenden Nocken, hinter der Anschlagfläche einrastet, werden die Arme des Montageindikators durch den Vorsprung auseinandergedrückt und gespreizt. Durch dieses Spreizen wird die Verrastung oder Verriegelung zwischen dem Montageindikator und dem zweiten Teil gelöst. Sobald die Rastverbindung zwischen dem zweiten Teil und dem Montageindikator gelöst ist, läßt sich der Montageindikator ohne größeren Kraftaufwand vom zweiten Teil abziehen. Dies ist dann ein sicheres Zeichen dafür, daß die Verbindung zwischen den beiden Teilen mit der erforderlichen Zuverlässigkeit zustande gekommen ist, d.h. der Ring hinter der Anschlagfläche eingerastet ist. Üblicherweise wird man den Ring mit zwei Stegen, die ebenfalls elastisch verformbar sind, am zweiten Teil befestigen. Dementsprechend wird man in einem solchen Fall auch zwei Arme verwenden. Wenn die Stege einander diametral gegenüberliegen, dann reicht der Montageindikator etwa über die Hälfte des Umfangs des zweiten Teils. Es sind jedoch auch Konstellationen denkbar, in denen man mehr Stege zur Verbindung zwischen dem zweiten Teil und dem Ring hat. In diesem Fall muß die Zahl der Stege und die Zahl der Arme nicht unbedingt übereinstimmen. Da mindestens einem Arm ein Haltearm zugeordnet ist, der radial innerhalb des Steges angeordnet ist, ist der Steg radial innen und radial außen von zwei Elementen des Montageindikators eingeschlossen. Radial außen befindet sich der Arm, vorzugsweise mit der Stufe. Radial innen befindet sich dann der Haltearm, der ein versehentliches Aufspreizen der Arme verhindert, solange das zweite Teil nicht am ersten Teil verrastet ist.

Vorzugsweise weist jeder Arm an seinem den Steg übergreifenden Ende einen Rasthaken auf. Ein Rasthaken weist, wie der Vorsprung auch, eine Anlauffläche auf, die gegenüber einer Aufschubrichtung um beispielsweise 45° geneigt ist. Mit dieser Anlauffläche werden die Arme beim Aufschieben auf die Stege auseinandergespreizt. Sobald die Rasthaken den Steg vollständig überquert haben, dann federn die Arme zurück und die Rasthaken haken sich mit einer Anschlagfläche an den Stegen fest. Dies ist eine relativ einfache Möglichkeit, den Montageindikator am zweiten Teil zu montieren.

Bevorzugterweise weist der Arm in einer Entfernung vom Rasthaken, die der Breite des Stegs entspricht, einen Hilfsanschlag auf. Wenn der Arm auf dem Steg eingerastet ist, dann ist eine Bewegung weder in der Aufschubrichtung noch in der entgegengesetzten Richtung möglich. In die eine Richtung blockiert der Hilfsanschlag die Bewegung. In der anderen Richtung blockiert der Rasthaken die Bewegung. Je kleiner die Bewegungsmöglichkeiten des Montageindikators am zweiten Teil sind, desto geringer ist die Gefahr, daß sich der Montageindikator versehentlich vom zweiten Teil löst, solange der zweite Teil noch nicht mit dem ersten Teil bestimmungsgemäß verbunden ist.

Vorzugsweise weisen die Arme vom Hilfsanschlag bis zumindest zum Rasthaken eine radial nach außen gerichtete Stufe auf, wobei die Arme in Axialrichtung zumindest teilweise mit dem Ring in Überdeckung stehen. Damit wird einerseits eine Bewegung des Montageindikators in Axialrichtung vom zweiten Teil weg blockiert. Da die Arme und der Ring teilweise in Überdeckung stehen, ist es nicht möglich, den Montageindikator in Axialrichtung am Ring vorbei vom zweiten Teil abzuziehen. Die Stufe ermöglicht auf einfache Weise, daß man den Rasthaken und den Hilfsanschlag ausbildet. Die Stufe ist also eine auf einen bestimmten Umfangsbereich begrenzte Durchmesservergrößerung der Arme.

Vorzugsweise weist der Ring eine ovale Form auf und die Arme sind im Bereich seines kleinsten Durchmessers angeordnet. Damit stellt man auf einfache Weise sicher, daß die Arme weit genug gespreizt werden können, um von den Stegen freizukommen, wenn die beiden Teile richtig zusammengesteckt werden.

Auch ist von Vorteil, wenn der Haltearm axial zum Arm versetzt angeordnet ist. Damit bleibt der Arm neben dem Steg radial innen für den Vorsprung frei zugänglich, so daß der Arm durch den Vorsprung gespreizt werden kann, wenn der Vorsprung vollständig durch den Ring hindurchgetreten ist.

Auch ist von Vorteil, wenn der Arm in einem dem Steg benachbarten Bereich weiter radial nach innen vorsteht als der Haltearm. Der Haltearm stört dann die Möglichkeit nicht, daß der Vorsprung die Arme auseinanderdrückt.

Auch ist von Vorteil, wenn zwischen dem Arm und dem Haltearm in Axialrichtung ein Schlitz angeordnet ist. Der Arm kann dann weitgehend unabhängig vom Haltearm radial nach außen verformt werden.

Vorzugsweise weist der Steg an seiner radialen Innenseite einen radial nach innen ragenden Vorsprung auf, dessen axialer Abstand zum Ring der axialen Entfernung zwischen einer axialen Außenkante des Arms und einer axialen Außenkante des Haltearms entspricht. Der radial nach innen ragende Vorsprung des Steges sichert also zusammen mit dem Ring eine axiale Position des Montageindikators am zweiten Teil. Damit wird verhindert, daß der Montageindikator axial vom Ring entfernt werden kann. Der Montageindikator wird also relativ genau in einer Position festgehalten, in der der Vorsprung auf die Arme wirken kann, wenn das erste Teil und das zweite Teil miteinander verrastet werden.

Bevorzugterweise weist der Montageindikator mindestens einen Sicherungshaken auf, der den Ring in Axialrichtung übergreift. Dies ist eine zusätzliche Maßnahme, um eine axiale Bewegung des Montageindikators auf dem zweiten Teil zu verhindern.

Auch ist von Vorteil, wenn der Montageindikator ein Griffstück aufweist. Insbesondere dann, wenn der Montageindikator nach erfolgter Montage nicht von selbst vom zweiten Teil abspringt, erleichtert ein Griffstück die Kontrolle, ob die Verbindung zwischen dem ersten Teil und dem zweiten Teil richtig zustande gekommen ist. Der Monteur kann den Montageindikator am Griffstück erfassen und durch leichtes Ziehen überprüfen, ob das erste Teil und das zweite Teil richtig miteinander verbunden sind.

Die Erfindung wird im folgenden anhand eines bevorzugten Ausführungsbeispiels in Verbindung mit der Zeichnung beschrieben. Hierin zeigen:
- Fig. 1: eine Steckkupplung vor dem Verbinden zweier Teile,
- Fig. 2: die Steckkupplung im montierten Zustand,
- Fig. 3: einen Schnitt III-III nach Fig. 2,
- Fig. 4: eine perspektivische Darstellung eines Montageindikators,
- Fig. 5: eine Vorderansicht des Montageindikators,
- Fig. 6: eine Vorderansicht eines Teils der Steckkupplung und
- Fig. 7: eine Seitenansicht des Teils der Steckkupplung.

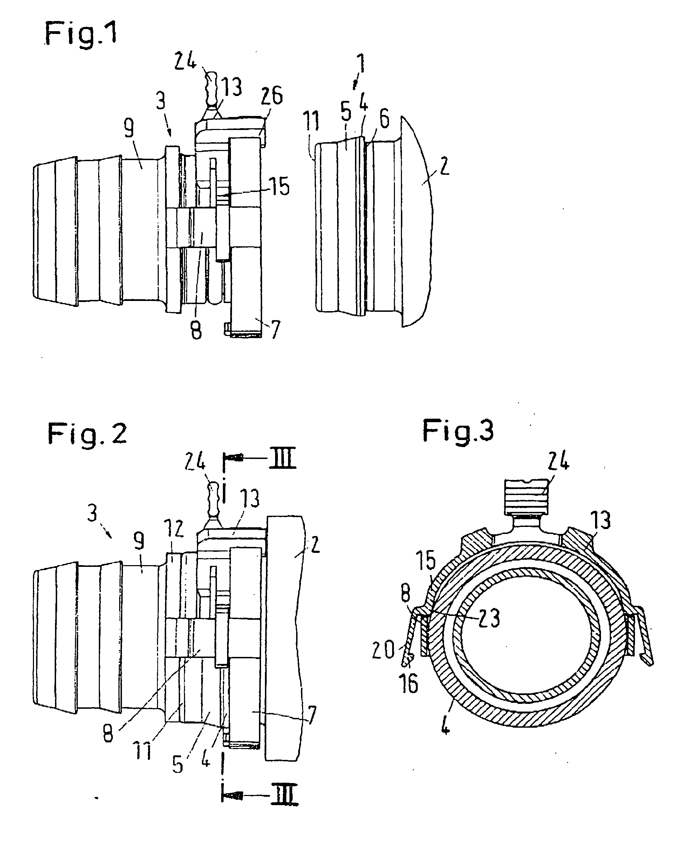

Fig. 1 zeigt eine Steckkupplung 1 vor dem Verbinden. Die Steckkupplung 1 weist ein erstes Teil 2 und ein zweites Teil 3 auf. Das erste Teil weist einen umlaufenden Vorsprung 4 mit einer vor der Montage zum zweiten Teil 3 hin gerichteten Anlauffläche 5 und einer auf der gegenüberliegenden Seite des Vorsprungs 4 angeordneten Anschlagfläche 6 auf.

Das zweite Teil 3 weist einen Ring 7 auf, der über zwei Stege 8 mit einem Korpus 9 des zweiten Teils 3 verbunden ist. Sowohl der Ring 7 als auch die Stege 8 sind elastisch verformbar. Die beiden Stege 8 liegen einander diametral gegenüber, bezogen auf einen Durchmesser des Korpus 9.

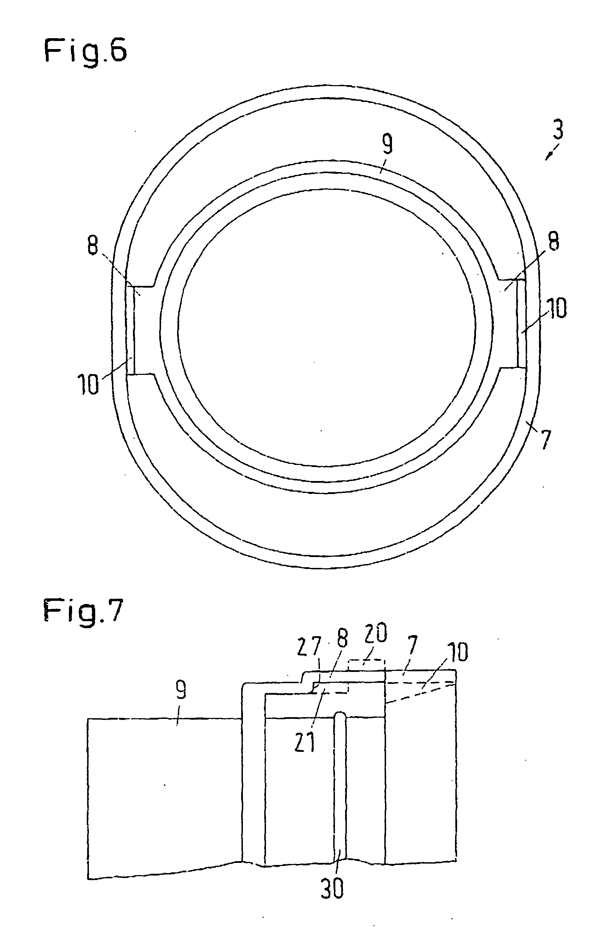

Wie insbesondere aus Fig. 6 zu erkennen ist, hat der Ring 7 eine ovale oder jedenfalls längliche Form und die beiden Stege 8 sind im Bereich des kleinsten Durchmessers des Rings 7 angeordnet.

Der Ring 7 hat im Bereich eines jeden Steges 8 einen radial nach innen ragenden Nocken 10. Im Ruhezustand, d.h. bei unverformten Stegen 8 und unverformtem Ring 7, ist der Abstand zwischen den beiden Nocken 10 kleiner als der Durchmesser des Vorsprungs 4. Wenn das erste Teil 2 mit seinem dem zweiten Teil 3 zugewandten axialen Ende 11 durch den Ring 7 geführt wird, dann kommt die Anlauffläche 5 zur Anlage an die Nocken 10. Bei einer weiteren Bewegung des ersten Teils 1 in Richtung auf das zweite Teil 3 werden die Nocken 10 und damit die Stege 8 und der Ring 7 im Bereich der Stege 8 radial nach außen gedrückt, so daß der Vorsprung 4 an den Nocken 10 vorbeigeführt werden kann. Sobald der Vorsprung 4 die Nocken 10 passiert hat, federt der Ring 7 im Bereich der Stege 8 wieder radial nach innen und die Nocken 10 hintergreifen die Anschlagfläche 6. Dann ist das erste Teil 2 mit dem zweiten Teil 3 verrastet.

Um die Verbindung zwischen den beiden Teilen 2, 3 wieder zu lösen, kann man den Ring 7 im Bereich seines größten Durchmessers zusammendrücken. Dabei verformt sich der Ring 7 im Bereich der Stege 8 radial nach außen und zwar so weit, daß der Abstand zwischen den Nokken 10 größer wird als der Durchmesser des Vorsprungs 4. Sobald sich die beiden Nocken 10 weit genug voneinander entfernt haben, kann das erste Teil 2 vom zweiten Teil 3 abgezogen werden. Eine derartige Ausbildung ist prinzipiell aus DE 37 27 858 C2 oder DE 38 43 995 C1 bekannt. Die Nocken 10 sind dabei nicht unbedingt erforderlich, wenn der Ring 7 mit seinem kleinsten Durchmesser in ausreichendem Maß verformt werden kann.

Fig. 2 zeigt das zweite Teil 3 in Eingriff mit dem ersten Teil 2. Es ist zu erkennen, daß der Vorsprung 4 vollständig durch den Ring 7 hindurchgetreten ist. Das axiale Ende 11 des ersten Teils 2 liegt an einem umlaufenden Begrenzer 12 am zweiten Teil 3 an. Von dem Begrenzer 12 gehen auch die Stege 8 ab. Dies ist allerdings nicht zwingend erforderlich. Es ist auch nicht zwingend erforderlich, daß die Nocken 10 an der gleichen Position in Umlaufrichtung am Ring 7 angeordnet sind, wie die Stege 8. Diese Ausgestaltung hat jedoch Vorteile.

Eine visuelle Kontrolle, ob das erste Teil 2 und das zweite Teil 3 bestimmungsgemäß miteinander in Eingriff gekommen sind, ist nicht in allen Fällen möglich. In manchen Fällen wird die Steckkupplung 1 in Bereichen eingesetzt, die schwer einsehbar sind. Eine akustische Kontrolle, bei der der Monteur überprüfen kann, ob sich beim Zusammenstecken ein "Klack" ergeben hat, das das Einrasten der Nocken 10 hinter der Anschlagfläche 6 anzeigt, ist nicht in allen Fällen möglich. Bei lauten Umgebungsbedingungen kann der Monteur sich nicht darauf verlassen, daß er dieses Geräusch hört.

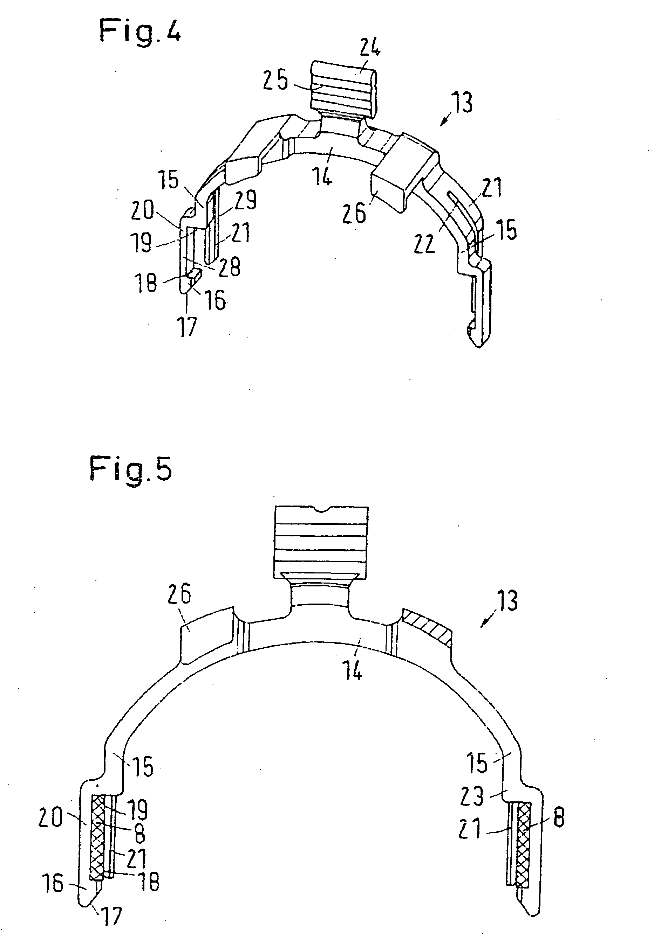

Um eine Kontrolle zu ermöglichen, ob die Verbindung zwischen dem ersten Teil 2 und dem zweiten Teil 3 wunschgemäß erfolgt ist, also die Nocken 10 hinter der Anschlagfläche 6 eingerastet sind, ist ein Montageindikator 13 vorgesehen. Dieser Montageindikator 13 ist in Fig. 4 perspektivisch und in Fig. 5 von vorne, d.h. aus der Sicht des ersten Teils 2 im nicht montierten Zustand, dargestellt.

Der Montageindikator 13 weist eine U-förmig verlaufende Basis 14 auf, die in zwei Arme 15 übergeht. Beide Arme sind spiegelbildlich gleich aufgebaut, so daß im folgenden nur noch ein Arm 15 beschrieben wird.

An der Spitze des Armes 15 befindet sich ein Rasthaken 16, der eine Anlauffläche 17 und eine Anschlagfläche 18 aufweist. Ein Hilfsanschlag 19 befindet sich in einer Entfernung von der Anschlagfläche 18, die der Breite der Stege 8 entspricht. Die Breite ist die Richtung, die bei der Darstellung von Fig. 6 von oben nach unten verläuft.

Der Arm 15 weist hierzu an seinem Ende eine radial nach außen vorstehende Stufe 20 auf, so daß das Ende des Arms 15 den Steg 8, der in Fig. 5 kreuzschraffiert eingezeichnet ist, oben und unten übergreifen kann. Im übrigen steht der Arm 15 aber mit dem Ring 7 in Überdekkung, so daß der Montageindikator 13 vom zweiten Teil 3 nicht in Richtung auf das erste Teil 2 weg bewegt werden kann.

Der Abstand zwischen der Anschlagfläche 18 und dem Hilfsanschlag 19 kann auch geringfügig größer sein als die Breite des Steges 8. Die Dimension sollte allerdings so gewählt werden, daß der Montageindikator 13 in Bezug auf das zweite Teil 3 keine größeren Bewegungen in radialer Richtung durchführen kann, wenn er, wie in Fig. 5 dargestellt ist, auf den Stegen 8 eingerastet ist.

Der Montageindikator 13 kann einfach auf die Stege 8 aufgeschoben werden. Durch die Anlauffläche 17 kann man dafür sorgen, daß die Arme 15 im Bereich der Stufe 20 weit genug aufgespreizt werden, so daß der Rasthaken 16 über die Stege 8 hinweggleiten und auf der anderen Seite der Stege 8 einrasten kann.

In Axialrichtung zu den Armen 15 versetzt befinden sich, wie aus den Fig. 1, 2, 4, 5 und 7 hervorgeht, Haltearme 21. Die Haltearme 21 gelangen bei der Montage des Montageindikators 13 radial zwischen die Stege 8 und verhindern, daß der Montageindikator 13 in Bezug auf das zweite Teil 3 seitlich (bezogen auf die Fig. 5 nach links und nach rechts) bewegt werden kann.

In Axialrichtung zwischen den Armen 15 und den Haltearmen 21 befindet sich ein Schlitz 22, so daß die Arme 15 unabhängig von den Haltearmen 21 radial nach außen bzw. nach innen federn können. Wie aus Fig. 5 zu erkennen ist, stehen die Arme 15 jedenfalls in einem Bereich 23, der dem jeweiligen Steg 8 benachbart ist, radial weiter nach innen vor als die Haltearme 21.

Der Montageindikator 13 weist auch ein Griffelement 24 auf, das eine geriffelte Grifffläche 25 haben kann.

Weiterhin weist der Montageindikator 13 zwei Sicherungshaken 26 auf, die, wie aus Fig. 1 zu erkennen ist, den Ring 7 in Axialrichtung übergreifen. Die Sicherungshaken 26 verhindern, daß der Montageindikator 13 in Axialrichtung vom Ring 7 weg bewegt und dabei gekippt werden kann.

Anstelle der zwei dargestellten Sicherungshaken 26 kann auch nur ein einzelner Sicherungshaken 26 vorgesehen sein. Dieser kann in Umfangsrichtung beispielsweise im Bereich des Griffelements 24 angeordnet sein.

Wie aus Fig. 7 zu erkennen ist, weist der Steg an seiner radialen Innenseite einen radial nach innen ragenden Vorsprung 27 auf. Der Vorsprung 27 hat einen Abstand zum Ring 7, der etwa genau so groß ist, wie der Abstand einer axialen Außenkante 28 des Arms 15 und einer axialen Außenkante 29 des Haltearms 21. In Fig. 7 sind gestrichelt die Stufe 20 des Arms 15 und der Haltearm 21 eingezeichnet. Es ist also zu erkennen, daß durch den Ring 7 und den Vorsprung 27 der Montageindikator 13 zusätzlich in axialer Richtung auf dem zweiten Teil 3 fixiert wird. In Fig. 7 ist auch ein Nocken 10 gestrichelt eingezeichnet, der hier keilförmig ausgebildet ist. Ferner ist ein Dichtungsring 30 dargestellt, der im eingekuppelten Zustand eine Dichtung zwischen den beiden Teilen 2, 3 der Steckkupplung 1 bewirkt.

Der Montageindikator wird vor dem Zusammenfügen der beiden Teile 2, 3 der Steckkupplung 1 auf das zweite Teil 3 aufgesetzt und hält dort aufgrund der beschriebenen Maßnahmen (Rasthaken 16, Hilfsanschlag 19, Sicherungshaken 26, Haltearme 21, Ring 7 und Vorsprung 27) fest. Dieses Festhalten muß nicht spielfrei sein. Es ist aber praktisch nicht möglich, den Montageindikator 13 vom zweiten Teil 3 zu entfernen, ohne größere Kräfte aufzuwenden oder den Montageindikator 13 gezielt zu verformen.

Wenn nun der erste Teil 2 und der zweite Teil 3 zusammengeschoben werden, so daß der Vorsprung 4 durch den Ring 7 hindurchtritt, dann ergibt sich, wenn der Vorsprung 4 vollständig durch den Ring 7 hindurchgetreten ist, eine Situation, bei der der Vorsprung 4 auf den Bereich 23 des Arms 15 trifft und die beiden Arme 15 dann so weit auseinanderspreizt, daß die Rasthaken 16 von den Stegen 8 freikommen. In diesem Fall läßt sich der Montageindikator 13 am Griffelement 24 erfassen und in Radialrichtung vom zweiten Teil 3 abziehen.

Wenn die Verbindung zwischen den beiden Teilen 2, 3 noch nicht so erfolgt ist, daß die Nocken 10 hinter der Anschlagfläche 6 eingerastet sind, dann werden die Arme 15 auch noch nicht weit genug gespreizt und die Rasthaken 16 halten den Montageindikator 13 noch an den Stegen 8 fest. Die Darstellung der Fig. 3 zeigt eine etwas übertriebene Spreizung der Arme 15, um deutlich zu machen, wie die Rasthaken 16 von den Stegen 8 freikommen. In Wirklichkeit wird man etwas engere Toleranzen wählen.

## Patentansprüche

1. Steckkupplung (1) zum Verbinden zweier Fluidleitungen mit einem ersten Teil (2), das einen umlaufenden Vorsprung (4) mit einer zu einem axialen Ende (11) hin gerichteten Anlauffläche (5) und einer zum anderen axialen Ende hin gerichteten Anschlagfläche (6) aufweist, und einem zweiten Teil (3), das einen an Stegen (8) gehaltenen, elastisch verformbaren Ring (7) aufweist, der in einer Verriegelungsstellung hinter der Anschlagfläche (6) einrastet, wobei ein Montageindikator (13) mit jeweils einem von mindestens zwei Armen (15) an einem der Stege (8) verrastet ist, solange der Ring (7) nicht hinter der Anschlagfläche (6) eingerastet ist, und der Vorsprung (4) die Arme (15) so weit auseinanderdrückt, dass die Arme (15) von den Stegen (8) freikommen, wenn der Ring (7) hinter der Anschlagfläche (6) eingerastet ist, **dadurch gekennzeichnet, daß** mindestens einem Arm (15) ein Haltearm (21) zugeordnet ist, der radial innerhalb des Steges (8) angeordnet ist.

2. Steckkupplung nach Anspruch 1, **dadurch gekennzeichnet, daß** jeder Arm (15) an seinem den Steg (8) übergreifenden Ende einen Rasthaken (16) aufweist.

3. Steckkupplung nach Anspruch 2, **dadurch gekennzeichnet, daß** der Arm (15) in einer Entfernung vom Rasthaken (16), die der Breite des Stegs (8) entspricht, einen Hilfsanschlag (19) aufweist.

4. Steckkupplung nach Anspruch 3, **dadurch gekennzeichnet, daß** die Arme (15) vom Hilfsanschlag (19) bis zumindest zum Rasthaken (16) eine radial nach außen gerichtete Stufe (20) aufweisen, wobei die Arme (15) in Axialrichtung zumindest teilweise mit dem Ring (7) in Überdeckung stehen.

5. Steckkupplung nach einem der Ansprüche 1 bis 4, **dadurch gekennzeichnet, daß** der Ring (7) eine ovale Form aufweist und die Arme (15) im Bereich seines kleinsten Durchmessers angeordnet sind.

6. Steckkupplung nach einem der Ansprüche 1 bis 5, **dadurch gekennzeichnet, daß** der Haltearm (21) axial zum Arm (15) versetzt angeordnet ist.

7. Steckkupplung nach einem der Ansprüche 1 bis 6, **dadurch gekennzeichnet, daß** der Arm (15) in einem dem Steg (8) benachbarten Bereich (23) weiter radial nach innen vorsteht als der Haltearm (21).

8. Steckkupplung nach einem der Ansprüche 1 bis 7, **dadurch gekennzeichnet, daß** zwischen dem Arm (15) und dem Haltearm (21) in Axialrichtung ein Schlitz (22) angeordnet ist.

9. Steckkupplung nach einem der Ansprüche 6 bis 8, **dadurch gekennzeichnet, daß** der Steg (8) an seiner radialen Innenseite einen radial nach innen ragenden Vorsprung (27) aufweist, dessen axialer Abstand zum Ring (7) der axialen Entfernung zwischen einer axialen Außenkante (28) des Arms (15) und einer axialen Außenkante (29) des Haltearms (21) entspricht.

10. Steckkupplung nach einem der Ansprüche 1 bis 9, **dadurch gekennzeichnet, daß** der Montageindikator (13) mindestens einen Sicherungshaken (26) aufweist, der den Ring (7) in Axialrichtung übergreift.

11. Steckkupplung nach einem der Ansprüche 1 bis 10, **dadurch gekennzeichnet, daß** der Montageindikator (13) ein Griffstück (24) aufweist.

## Claims

1. Plug-in coupling (1) for connecting two fluid conduits, with a first part (2) comprising a circumferential projection (4), with a sloping face (5) directed towards one axial end (11) and a stop face (6) directed towards the other axial end, and a second part (3) comprising a resiliently deformable ring (7), which is held on webs (8) and engages in a locking position behind the stop face (6), a respective one of at least two arms (15) of an assembly indicator (13) snapping into place on one of the webs (8), as long as the ring (7) is not engaged behind the stop face (6), and the projection (4) pressing the arms (15) sufficiently far apart that the arms (15) are released from the webs (8) if the ring (7) is engaged behind the stop face (6), **characterised in that** a holding arm (21) is assigned to at least one arm (15) and is arranged radially inside the web (8).

2. Plug-in coupling according to claim 1, **characterised in that** each arm (15) comprises an engagement hook (16) on the end thereof which overlaps the web (8).

3. Plug-in coupling according to claim 2, **characterised in that** the arm (15) comprises an auxiliary stop (19) at a distance corresponding to the width of the web (8) from the engagement hook (16).

4. Plug-in coupling according to claim 3, **characterised in that** the arms (15) comprise a radially outwardly directed step (20) from the auxiliary stop (19) at least as far as the engagement hook (16), the arms (15) at least partially overlapping with the ring (7) in the axial direction.

5. Plug-in coupling according to any one of claims 1 to 4, **characterised in that** the ring (7) has an oval shape and the arms (15) are arranged in the region with the smallest diameter.

6. Plug-in coupling according to any one of claims 1 to 5, **characterised in that** the holding arm (21) is arranged so as to be axially offset from the arm (15).

7. Plug-in coupling according to any one of claims 1 to 6, **characterised in that** the arm (15) projects further radially inwards than the holding arm (21) in a region (23) adjacent to the web (8).

8. Plug-in coupling according to any one of claims 1 to 7, **characterised in that** a slot (22) is arranged between the arm (15) and the holding arm (21) in the axial direction.

9. Plug-in coupling according to any one of claims 6 to 8, **characterised in that** the web (8) comprises, on the radial inner side thereof, a radially inwardly projecting projection (27), the axial distance of which from the ring (7) corresponds to the axial distance between an axial outer edge (28) of the arm (15) and an axial outer edge (29) of the holding arm (21).

10. Plug-in coupling according to any one of claims 1 to 9, **characterised in that** the assembly indicator (13) comprises at least one safety hook which overlaps the ring (7) in the axial direction.

11. Plug-in coupling according to any one of claims 1 to 10, **characterised in that** the assembly indicator (13) comprises a handle (24).

## Revendications

1. Raccord enfichable (1) pour raccorder deux conduites de fluide avec une première partie (2) qui présente une saillie (4) périphérique avec une surface de contact (5) dirigée vers une extrémité (11) axiale et une surface de butée (6) dirigée vers l'autre extrémité axiale, et une seconde partie (3) qui présente une bague (7) maintenue sur des traverses (8), déformable élastiquement et qui s'encliquète dans une position de verrouillage derrière la surface de butée (6), un indicateur de montage (13) étant encliqueté avec respectivement l'un au moins de deux bras (15) sur l'une des traverses (8), tant que la bague (7) n'est pas encliquetée derrière la surface de butée (6), et la saillie (4) écarte les bras (15) jusqu'à ce que les bras (15) se libèrent des traverses (8) lorsque la bague (7) est encliquetée derrière la surface de butée (6), **caractérisé en ce qu'**à au moins un bras (15) est associé un bras de support (21) disposé radialement à l'intérieur de la traverse (8).

2. Raccord enfichable selon la revendication 1, **caractérisé en ce que** chaque bras (15) présente, sur son extrémité recouvrant la traverse (8), un crochet d'encliquetage (16).

3. Raccord enfichable selon la revendication 2, **caractérisé en ce que** le bras (15) présente une butée auxiliaire (19) à une distance du crochet d'encliquetage (16) qui correspond à la largeur de la traverse (8).

4. Raccord enfichable selon la revendication 3, **caractérisé en ce que** les bras (15) présentent de la butée auxiliaire (19) à au moins le crochet d'encliquetage (16) un gradin (20) dirigé radialement vers l'extérieur, les bras (15) étant en recouvrement avec la bague (7) au moins partiellement dans le sens axial.

5. Raccord enfichable selon l'une quelconque des revendications 1 à 4, **caractérisé en ce que** la bague (7) présente une forme ovale et les bras (15) sont disposés dans la zone de son plus petit diamètre.

6. Raccord enfichable selon l'une quelconque des revendications 1 à 5, **caractérisé en ce que** le bras de support (21) est disposé en déport axial par rapport au bras (15).

7. Raccord enfichable selon l'une quelconque des revendications 1 à 6, **caractérisé en ce que** dans une zone (23) contiguë à la traverse (8) le bras (15) dépasse plus radialement vers l'intérieur que le bras de support (21).

8. Raccord enfichable selon l'une quelconque des revendications 1 à 7, **caractérisé en ce qu'**une fente (22) est disposée entre le bras (15) et le bras de support (21) dans le sens axial.

9. Raccord enfichable selon l'une quelconque des revendications 6 à 8, **caractérisé en ce que** la traverse (8) présente sur son côté intérieur radial une saillie (27) pénétrant radialement vers l'intérieur, dont la distance axiale par rapport à la bague (7) correspond à la distance axiale entre une arête extérieure (28) axiale du bras (15) et une arête extérieure (29) axiale du bras de support (21).

10. Raccord enfichable selon l'une quelconque des revendications 1 à 9, **caractérisé en ce que** l'indicateur de montage (13) présente au moins un crochet de blocage (26) qui recouvre la bague (7) dans le sens axial.

11. Raccord enfichable selon l'une quelconque des revendications 1 à 10, **caractérisé en ce que** l'indicateur de montage (13) présente une partie de préhension (24).
